# EUROPEAN PATENT SPECIFICATION

(11) **EP 1 611 326 B1**
(45) Date of publication and mention of the grant of the patent: **06.05.2009**
(21) Application number: 04718779.4
(22) Date of filing: 09.03.2004
(51) Int. Cl.: F01P 7/16, F16K 11/04, G05D 23/13

(54) **THERMOSTATIC VALVE**
THERMOSTATVENTIL
VANNE THERMOSTATIQUE

(30) Priority: 24.03.2003 SE 0300788
(43) Date of publication of application: 04.01.2006
(73) Proprietor: Scania CV AB (publ), 151 87 Södertälje (SE)
(72) Inventor: KARDOS, Zoltan, S-151 35 Södertälje (SE)
(86) International application number: PCT/SE2004/000332
(87) International publication number: WO 2004/085808

(56) References cited:
- EP-A1- 0 838 580
- US-A- 3 907 199
- US-A- 4 685 851
- US-A- 4 961 530
- US-A- 5 582 138
- US-B2- 6 471 134

## Description

The invention relates to a Thermostatic valve for a cooling circuit for a combustion engine whereby the valve comprises a valve housing, an inlet therein for fluid flowing directly from the engine, an inlet therein for fluid flowing from a radiator forming part of the cooling circuit, and an outlet therein for fluid flowing from the two inlets, a valvepiece arranged in the valve housing to regulate the fluid flow from the inlet for fluid from the radiator, a fluid-temperature-dependent first activating element arranged to act upon said valvepiece against the action of a spring element in response to rising temperature of the fluid in the outlet, a second activating element capable of being acted upon independently of the temperature of the fluid in the outlet and arranged to be able to act upon said valvepiece, and an activator arranged outside the valve housing and intended to activate the second activating element.

In known cooling circuits for combustion engines, hot fluid flows out from the engine and is distributed in two lines whereby one leads through a radiator in which the fluid is cooled and the other leads past the radiator (bypass). The two lines are linked in that a thermostatic valve regulates the ratio between the flows from the two lines and hence leads through the radiator a greater or smaller proportion as necessary of the fluid flow from the engine through the radiator. The thermostatic valve has two inlet ports, one of them for the cooled fluid flow from the radiator, the other for the bypassed hot fluid flow coming directly from the engine. The mixture of these two fluid streams leaves the valve via a third port in proportions determined by the position of a valvepiece arranged in the valve. This position is determined as a function of the temperature of the fluid mixture. This is done by an element of expandable material being arranged in or adjacent to said third port in order, when the fluid temperature rises, to expand and act upon the valvepiece mechanically so that the port with cooled fluid opens more relative to the port with fluid coming directly from the engine. The temperature is thus kept below a maximum permissible value in the cooling circuit. This maximum value may in general be selected, e.g. by the valvepiece being springloaded in various ways.

Using a further element of expandable material arranged outside the fluid flows, e.g. in the open air, creates a possibility of acting upon the valve setting from outside. In such cases there is in said element a heating element capable of being acted upon from outside and arranged to be able in a known manner to raise the temperature in the expandable material and thereby expand the latter. This element can act upon the valvepiece mechanically and therefore open the valve independently of the temperatures in the fluid flows. This makes it possible to achieve another position of equilibrium of the valvepiece which may be used in operating situations which differ from normal.

EP 0235472 A1 refers to a thermostatic valve corresponding to the above description. In that case the second element is arranged outside the valvepiece. Two elements of expandable material are arranged on their respective sides of the valvepiece the pistons which they are intended to act upon and hence occupy a large amount of space and consist of many parts, thereby making assembly difficult and expensive.

The object of the present invention is to provide a thermostatic valve of simpler design comprising fewer parts. The valve will thus be easier to manufacture.

According to the present invention, this object is achieved by said activating elements being arranged in one and the same housing and by the housing having an aperture via which the activating elements can act upon the valvepiece, the housing being arranged in a leadthrough in the valve housing with a portion in which the second activating element is arranged outside the valve housing.

According to a particularly preferred embodiment, the first activating element comprises a tubular element of expandable material and a stem which is arranged in the tubular element and which is capable of being moved by the expandable material and intended, in response to rising temperature of the fluid in the outlet, to urge the valvepiece towards a more open position by means of one end, the other end of the stem being tapered.

According to a further particularly preferred embodiment, the second activating element comprises a second tubular element of expandable material in which a second stem movable by the expandable material is arranged, and said second activating element is arranged serially with the first activating element on the latter's side facing away from the valvepiece in such a way that the longitudinal axes of the stems coincide.

According to a particularly preferred embodiment, the activator is an electric resistive heating element in loop form.

According to another preferred embodiment, the activator is a tubular electromagnetic activating means in which a stem movable by electromagnetic force is arranged, and said activator is arranged serially with the first activating element on the latter's side facing away from the valvepiece in such a way that the longitudinal axes of the stems coincide.

According to another preferred embodiment, the valvepiece is a mushroom valve and the inlet incorporates a valve seat which in cooperation with the valvepiece regulates the fluid flow from the inlet.

According to a further preferred embodiment, the valvepiece has arranged on it a pin whose longitudinal axis coincides with that of the stem and which extends in the longitudinal direction far enough towards the stem so that upon activation of at least one of the activating elements the stem can push the pin in the opposite direction and hence the valvepiece towards a more open position.

Other advantages and characteristics which distinguish the invention are indicated in the ensuing description of embodiments of the present invention.

The description refers to the accompanying drawing in which:

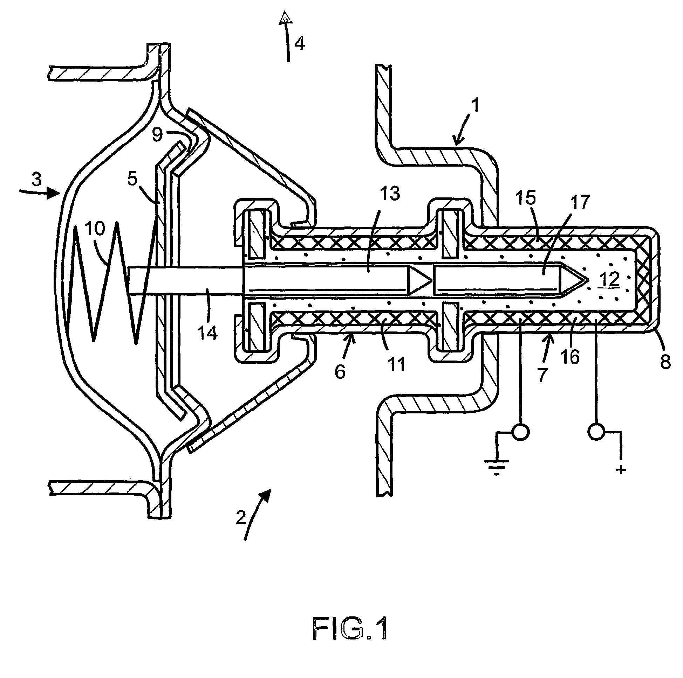

Fig. 1 depicts a cross-sectional side view of a thermostatic valve according to the present invention.
Fig. 2 depicts a thermostatic valve intended to be arranged in a cooling circuit for combustion engines. The thermostatic valve comprises a valve housing 1 which has an inlet 2 for fluid flowing directly from the engine via a bypass line in said cooling circuit, and an inlet 3 for cooled fluid flowing from a radiator in said cooling circuit. The thermostat further comprises an outlet 4 for mixed fluid flow coming from the two inlets 2, 3. The valve housing 1 further has arranged in it, in the inlet 3 for cooled fluid, a valvepiece 5 which in this embodiment is a valve mushroom intended, in the closed position, to rest against a valve seat 9 arranged in the inlet 3. The valvepiece 5 is preloaded in the closed position by a spring element 10, one end of which abuts against the upstream side of the valvepiece 5. The opposite end of the spring element 10 is arranged on a spring seat in the inlet 3. A passage between the inlet 2 for fluid direct from the engine and the outlet 4 for mixed fluid has arranged in it a fluid- temperature-dependent first activating element 6 containing a tubular element 11 made of expandable material. In this embodiment the expandable material is wax but other materials with the same characteristics are also conceivable, as also mixtures of wax and other materials such as metal turnings. The cylinder-shaped recess in the element 11 has arranged in it coaxially a lining 12 made of rubber or some other elastic material with comparable characteristics, in which lining a stem 13 is arranged for coaxial movement. A pin 14 perpendicular to the surface of the valve mushroom is arranged on the opposite side of the valvepiece 5 from the spring 10. The longitudinal axis of the stem 13 coincides with that of the pin 14 so that the end of the pin 14 which points away from the valvepiece 5 faces towards one end of the stem 13 and is therefore acted upon by the latter when the stem 13 is pushed out, due to temperature rise of the expandable material, from the element 11, thereby pushing the valvepiece 5 towards a more open position. The stem 13 is tapered towards its end which points away from the valvepiece 5, so that the expandable material as it expands can act upon the stem 13 with a force directed outwards.

A second activating element 7 is arranged serially with the first activating element 6 at the latter's end pointing away from the valvepiece 5. This activating element 7 comprises a tubular element 15 made of expandable material wax or other suitable material. The element 15 is an activator in the form of a looped resistive heating element 16 which can be heated by an external power source. The rubber lining 12 extends coaxially in a cylinder-shaped recess in the element 15. A stem 17 is arranged for coaxial movement in the recess in the rubber lining 12 in the element 15 so that one end of it faces towards the tapered end of the stem 13. Movement of the stem 17 towards the valvepiece 5 therefore acts upon the stem 13 and hence pushes the valvepiece 5 towards a more open position. In the same way as the stem 13, the stem 17 is tapered towards its end which points away from the valvepiece 5.

The activating elements 6, 7 are arranged in and partly enclosed by a housing 8 which has in its end facing towards the valvepiece 5 an aperture which allows the stem 13 to move out from the rubber lining 12. Substantially the whole of the other end of the housing 8, comprising the activating element 7, protrudes through an opening in the valve housing 1 and is therefore exposed to "the open air".

The thermostatic valve works in the following manner. Rising temperature in the bypass line from the engine causes the tubular element 11 in the first activating element 6 to expand and push the stem 13 out through the aperture in the housing 8 towards the pin 14 as a result of its tapered end, subjecting the stem 13 to a force component directed towards the aperture. The valvepiece 5 is therefore acted upon against the action of the spring 10 and lifts from the valve seat 9, thereby opening the duct of cooled fluid and hence imparting a lower temperature to the resulting fluid mixture.

If a different point of equilibrium is desired for the thermostatic valve, the resistive heating element 16 is connected to a power source and heated. The tubular element 15 then expands due to the heating and pushes the stem 17 outwards towards the aperture in the housing 8 as a result of the stem 17 having, like the stem 13, a tapered end and therefore being acted upon by a force component directed towards the aperture. The stem 17 then acts upon the stem 13 to push the pin 14. The valvepiece 5 is thus acted upon against the action of the spring 10 and lifts from the valve seat 9 to a new position of equilibrium. If the temperature in the fluid in the bypass line now rises, the tubular element 11 in the first activating element 6 will, through the movement of the stem 13, urge the valvepiece 5 away from this new point of equilibrium. It is thus possible to alter the characteristics of the thermostatic valve without altering its construction.

It should be noted that in other respects the thermostatic valve may be constructed in many ways according to the state of the art. For example, the valvepiece may set the ratio between the apertures of the two inlets and may also be of a different type, e.g. a slide valve or a piston opening and closing the inlet apertures. The second activating element may instead (7) comprise a tubular electromagnetic activating means which has arranged in it a stem (17) movable by electromagnetic force, and itself be arranged serially with the first activating element (6) on the latter's side facing away from the valvepiece in such a way that the longitudinal axes of the stems (13, 17) coincide.

## Claims

1. A thermostatic valve for a cooling circuit for a combustion engine whereby the valve comprises a valve housing (1), an inlet (2) therein for fluid flowing directly from the engine, an inlet (3) therein for fluid flowing from a radiator forming part of the cooling circuit, and an outlet (4) therein for fluid flowing from the two inlets (2, 3), a valvepiece (5) arranged in the valve housing (1) and regulating the fluid flow from the inlet (3) for fluid from the radiator, a fluid-temperature-dependent first activating element (6) arranged to act upon said valvepiece (5) against the action of a spring element (10) in response to rising temperature of the fluid in the outlet (4), a second activating element (7) capable of being acted upon independently of the temperature of the fluid in the outlet and arranged to be able to act upon said valvepiece (5), and an activator (16) arranged outside the valve housing (1) and intended to activate the second activating element (7), **characterised in that** said activating elements (6, 7) are arranged in one and the same housing (8) and that the housing (8) has an aperture via which the activating elements (6, 7) can act upon the valvepiece (5), the housing (8) being arranged in an opening in the valve housing (1), with a portion of the housing (8), in which the second activating element (7) is arranged, being situated outside the valve housing (1).

2. A thermostatic valve according to any one of the foregoing claims, **characterised in that** the first activating element (6) comprises a tubular element (11) of expandable material and a stem (13) which is arranged in the tubular element (11) and which is movable by the expandable material (11) and is intended, in response to rising temperature of the fluid in the outlet (4), to urge the valvepiece (5) towards a more open position by means of one end, the other end of the stem (13) being tapered.

3. A thermostatic valve according to claim 2, **characterised in that** the second activating element (7) comprises a second tubular element (15) which is made of expandable material and which has arranged in it a second stem (17) movable by the expandable material (11), and is itself arranged serially with the first activating element (6) on the latter's side facing away from the valvepiece, in such a way that the longitudinal axes of the stems (13, 17) coincide.

4. A thermostatic valve according to any one of the foregoing claims, **characterised in that** the activator (16) is a looped electrical resistive heating element.

5. A thermostatic valve according to claim 1 or 2, **characterised in that** the activator (16) is a tubular electromagnetic activating means which has arranged in it a stem (17) movable by electromagnetic force, and is itself arranged serially with the first activating element (6) on the side of the latter facing away from the valvepiece, in such a way that the longitudinal axes of the stems (13, 17) coincide.

6. A thermostatic valve according to any one of the foregoing claims, **characterised in that** the valvepiece (5) is a mushroom valve and that the inlet (3) comprises a valve seat (9) which in cooperation with the valvepiece (5) regulates the fluid flow from the inlet (3).

7. A thermostatic valve according to any one of claims 2-6, **characterised in that** the valvepiece (5) has arranged on it a pin (14) whose longitudinal axis coincides with the longitudinal axis of the stem (13) and which extends in the longitudinal direction far enough towards the stem (13) to enable the stem (13), in response to activation of at least one of the activating elements (6, 7), to move the pin (14) in the opposite direction and thereby move the valvepiece towards a more open position.

## Patentansprüche

1. Thermostatventil für einen Kühlkreislauf für einen Verbrennungsmotor, wobei das Ventil umfasst: ein Ventilgehäuse (1), einen Einlass (2) darin für direkt von dem Motor strömendes Fluid, einen Einlass (3) darin für von einem einen Teil des Kühlkreislaufs bildenden Kühler strömendes Fluid, und einen Auslass (4) darin für von den zwei Einlässen (2, 3) strömendes Fluid umfasst, sowie ein in dem Ventilgehäuse (1) angeordnetes Ventilteil (5), das den Fluidstrom von dem Einlass (3) für Fluid von dem Kühler reguliert, ein fluidtemperaturabhängiges erstes Aktivierungselement (6), das derart angeordnet ist, dass es auf das Ventilteil (5) gegen die Wirkung eines Federelements (10) in Antwort auf einen Temperaturanstieg des Fluids in dem Auslass (4) wirkt, ein zweites Aktivierungselement (7), das unabhängig von der Temperatur des Fluids in dem Auslass betätigbar ist, und das derart angeordnet ist, dass es auf das Ventilteil (5) einwirken kann, und einen außerhalb des Ventilgehäuses (1) angeordneten Aktivator (16), der dazu vorgesehen ist, das zweite Aktivierungselement (7) zu betätigen,
**dadurch gekennzeichnet, dass** die Aktivierungselemente (6, 7) in ein und demselben Gehäuse (8) angeordnet sind und dass das Gehäuse (8) eine Öffnung aufweist, über welche die Aktivierungselemente (6, 7) auf das Ventilteil (5) einwirken können, wobei das Gehäuse (8) in einer Öffnung in dem Ventilgehäuse (1) angeordnet ist, wobei ein Teil des Gehäuses (8), in welchem das zweite Aktivierungselement (7) angeordnet ist, außerhalb des Ventilgehäuses (1) angeordnet ist.

2. Thermostatventil nach einem der vorstehenden Ansprüche,
**dadurch gekennzeichnet, dass** das erste Aktivierungselement (6) ein rohrförmiges Element (11) aus dehnbarem Material und einen Schaft (13) umfasst, der in dem rohrförmigen Element (11) angeordnet ist und durch das dehnbare Material (11) bewegbar ist, und der dazu vorgesehen ist, in Antwort auf einen Temperaturanstieg des Fluids in dem Auslass (4) vermittels eines Endes das Ventilstück (5) in Richtung einer weiter geöffneten Stellung zu drängen, wobei sich das andere Ende des Schaftes (13) verjüngt.

3. Thermostatventil nach Anspruch 2,
**dadurch gekennzeichnet, dass** das zweite Aktivierungselement (7) ein zweites rohrförmiges Element (15) umfasst, das aus dehnbarem Material besteht und in dem ein zweiter Schaft (17) angeordnet ist, der durch das dehnbare Material (11) bewegbar ist und selbst in Reihe mit dem ersten Aktivierungselement (6) derart an dessen von dem Ventilstück wegweisender Seite angeordnet ist, dass die Längsachsen der Schäfte (13, 17) zusammenfallen.

4. Thermostatventil nach einem der vorstehenden Ansprüche,
**dadurch gekennzeichnet, dass** das Betätigungselement (16) ein schlaufenförmiges elektrisches Widerstandsheizelement ist.

5. Thermostatventil nach Anspruch 1 oder 2,
**dadurch gekennzeichnet, dass** das Betätigungselement (16) eine rohrförmige, elektromagnetische Betätigungsvorrichtung ist, in der ein durch elektromagnetische Kraft bewegbarer Schaft (17) angeordnet ist, der selbst in Reihe mit dem ersten Aktivierungselement (6) derart an dessen von dem Ventilstück wegweisender Seite angeordnet ist, dass die Längsachsen der Schäfte (13, 17) zusammenfallen.

6. Thermostatventil nach einem der vorstehenden Ansprüche,
**dadurch gekennzeichnet, dass** das Ventilteil (5) ein Pilzventil ist und dass der Einlass (3) einen Ventilsitz (9) umfasst, der in Wechselwirkung mit dem Ventilteil (5) den Fluidstrom von dem Einlass (3) reguliert.

7. Thermostatventil nach einem der Ansprüche 2 bis 6,
**dadurch gekennzeichnet, dass** das Ventilteil (5) einen an ihm angeordneten Stift (14) aufweist, dessen Längsachse mit der Längsachse des Schafts (13) zusammenfällt und der sich in der Längsrichtung weit genug in Richtung des Schafts (13) erstreckt, um zu ermöglichen, dass der Schaft (13) in Antwort auf eine Betätigung mindestens eines der Aktivierungselemente (6, 7) den Stift (14) in die entgegengesetzte Richtung zu bewegen und **dadurch** das Ventilteil in Richtung auf eine weiter geöffnete Stellung zu bewegen.

## Revendications

1. Vanne thermostatique pour un circuit de refroidissement d'un moteur à combustion, la vanne comprenant un corps de vanne (1), un orifice d'entrée (2) dans ce corps pour l'écoulement direct du fluide en provenance du moteur, un orifice d'entrée (3) dans ce corps pour l'écoulement du fluide en provenance d'une partie formant radiateur du circuit de refroidissement, et un orifice de sortie (4) dans ce corps pour l'écoulement du fluide depuis les deux orifices d'entrée (2, 3), une soupape (5) disposée dans le corps de vanne (1) et régulant l'écoulement du fluide depuis l'orifice d'entrée (3) pour le fluide provenant du radiateur, un premier élément d'actionnement (6), dépendant de la température du fluide, conçu pour agir sur ladite soupape (5) à l'encontre de l'action d'un élément formant ressort (10), en réponse à une élévation de température du fluide dans l'orifice de sortie (4), un deuxième élément d'actionnement (7) pouvant être actionné indépendamment de la température du fluide dans l'orifice de sortie et conçu pour pouvoir agir sur ladite soupape (5), et un actionneur (16) disposé à l'extérieur du corps de vanne (1) et destiné à actionner le deuxième élément d'actionnement (7), **caractérisée en ce que** lesdits éléments d'actionnement (6, 7) sont disposés dans un seul et même corps (8) et **en ce que** le corps (8) présente une ouverture à travers laquelle les éléments d'actionnement (6, 7) peuvent agir sur la soupape (5), le corps (8) étant disposé dans une ouverture formée dans le corps de vanne (1), et une partie du corps (8), dans laquelle est disposé le deuxième élément d'actionnement (7), étant située à l'extérieur du corps de vanne (1).

2. Vanne thermostatique selon l'une quelconque des revendications précédentes, **caractérisée en ce que** le premier élément d'actionnement (6) comprend un élément tubulaire (11) constitué d'un matériau dilatable et une tige (13) qui est disposée dans l'élément tubulaire (11) et qui peut être bougée par le matériau dilatable (11), et est destiné, en réponse à une élévation de la température du fluide dans l'orifice de sortie (4), à pousser la soupape (5) vers une position plus ouverte au moyen d'une extrémité, l'autre extrémité de la tige (13) étant conique.

3. Vanne thermostatique selon la revendication 2, **caractérisée en ce que** le deuxième élément d'actionnement (7) comprend un deuxième élément tubulaire (15) qui est constitué d'un matériau dilatable et qui contient en son sein une deuxième tige (17) pouvant être bougée par le matériau dilatable (11), et est lui-même disposé en série avec le premier élément d'activation (6) sur le côté de ce dernier qui se trouve à l'opposé de la soupape, de telle sorte que les axes longitudinaux des tiges (13, 17) coïncident.

4. Vanne thermostatique selon l'une quelconque des revendications précédentes, **caractérisée en ce que** l'activateur (16) est un élément chauffant résistif électrique bouclé.

5. Vanne thermostatique selon la revendication 1 ou 2, **caractérisée en ce que** l'activateur (16) est un moyen d'actionnement électromagnétique tubulaire qui contient en son sein une tige (17) pouvant être bougée par une force électromagnétique, et est lui-même disposé en série avec le premier élément d'actionnement (6) sur le côté de ce dernier qui se trouve à l'opposé de la soupape, de telle sorte que les axes longitudinaux des tiges (13, 17) coïncident.

6. Vanne thermostatique selon l'une quelconque des revendications précédentes, **caractérisée en ce que** la soupape (5) est une soupape-champignon et **en ce que** l'orifice d'entrée (3) comprend un siège de soupape (9) qui, en coopération avec la soupape (5), régule l'écoulement du fluide depuis l'orifice d'entrée (3).

7. Vanne thermostatique selon l'une quelconque des revendications 2 à 6, **caractérisée en ce que** la soupape (5) porte sur elle une broche (4) dont l'axe longitudinal coïncide avec l'axe longitudinal de la tige (13) et qui s'étend suffisamment loin vers la tige (13) dans la direction longitudinale pour permettre à la tige (13), en réponse à l'actionnement d'au moins l'un des éléments d'actionnement (6, 7), de déplacer la broche (14) dans le sens opposé et ainsi déplacer la soupape vers une position plus ouverte.
